# EUROPEAN PATENT SPECIFICATION

(11) **EP 3 284 931 B1**
(45) Date of publication and mention of the grant of the patent: **12.06.2019**
(21) Application number: 17185680.0
(22) Date of filing: 10.08.2017
(51) Int. Cl.: F16K 31/122, F02C 7/232, F16K 3/24, F16K 3/30, G05D 16/10

(54) **PRESSURE REGULATING VALVE WITH FLOW ANTI-ROTATION**
DRUCKREGELVENTIL MIT FLUSSDREHSICHERUNG
SOUPAPE DE RÉGULATION DE PRESSION AYANT UN ÉCOULEMENT ANTI-ROTATION

(30) Priority: 15.08.2016 US 201615236864
(43) Date of publication of application: 21.02.2018
(73) Proprietor: Hamilton Sundstrand Corporation, Charlotte, NC 28217-4578 (US)
(72) Inventor: CORETTO, August M., Manchester, CT 06040 (US); RICKIS, Aaron F., Longmeadow, MA 01106 (US)
(74) Representative: Dehns

(56) References cited:
- US-A- 5 664 760
- US-A1- 2014 109 979
- US-B1- 8 511 329

## Description

### BACKGROUND OF THE INVENTION

This invention generally relates to a pressure regulating valve, and more particularly, to a sleeve of a pressure regulating valve for use in a fuel line of an aircraft engine.

Gas turbine engines are typically used to power an aircraft. A fuel system provides fuel to various portion of the gas turbine engine. The fuel system includes various valves such as a pressure regulating valve, a high pressure relief valve, and a filter bypass valve that cooperate with each other to supply fuel to the gas turbine engine in a controller and accurate manner.

During operation of the fuel system, the pressure regulating valve commonly experiences a rotational force due to the fluid flow there through. In conventional assemblies, an anti-rotation device is positioned between the spool and the sleeve of the pressure regulating valve to minimize the effects of the rotational force, or not included if fluid housing does not cause flow rotation. The flow through the valve, and any rotational forces resulting from the flow, are dependent on the valves position within the fluid housing. As a result, the pressure regulating valves arranged within the fluid housing are not interchangeable with other systems because the anti-rotation device (or lack thereof) of each is dependent on the housing arrangement.

US 2014/0109979 relates to a pressure regulating valve.

### BRIEF DESCRIPTION OF THE INVENTION

According to one embodiment, a sleeve for a pressure regulating valve includes a sleeve body surrounding a central axis and defined by an overall length extending from a first end to a second end. The sleeve body has a central sleeve bore extending from the first end to the second end. The sleeve body includes a first set of windows circumferentially spaced about the central axis and a second set of windows axially spaced from the first set of windows and circumferentially spaced about the central axis. Each window of the first set of windows is defined by a plurality of small holes.

According to another embodiment, a sleeve for a pressure regulating valve includes a sleeve body surrounding a central axis and defined by an overall length extending from a first end to a second end. The sleeve body has a central sleeve bore extending from the first end to the second end. The sleeve body includes a first set of windows circumferentially spaced about the central axis and a second set of windows axially spaced from the first set of windows and circumferentially spaced about the central axis. Each window of the first set of windows radially aligns a fluid flow there through.

According to another embodiment, a pressure regulating valve includes a valve housing defining an internal bore and having a valve inlet to receive a fluid at a first pressure and a fluid outlet to return fluid to a pump. A sleeve surrounds a central axis and is defined by an overall sleeve length extending from a first sleeve end to a second sleeve end. The sleeve body has a central sleeve bore. The sleeve includes a set of windows circumferentially spaced about the central axis adjacent the valve inlet. Each window of the set of windows is defined by a plurality of small holes. A piston is received within the central sleeve bore. A spring assembly biases the piston within the sleeve to a valve closed position. When the pressure at the valve inlet is greater than a spring biasing load, the piston moves to a valve open position to provide fluid to the valve outlet.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a fuel system for an aircraft;
FIG. 2 is an exploded view of an example of a pressure regulating valve of FIG. 1;
FIG. 3 is cross-sectional view of the pressure regulating valve of FIG. 2 in a closed position;
FIG. 4 is cross-sectional view of the pressure regulating valve of FIG. 2 in an open position;
FIG. 5 is a perspective view of a sleeve of a pressure regulating valve according to an embodiment;
FIG. 6 is a cross-sectional view of the pressure regulating valve including the sleeve of FIG. 5 in a closed position according to an embodiment; and
FIG. 7 is a cross-sectional view of a predicted fluid flow path through a pressure regulating valve having a sleeve of FIG. 5 according to an embodiment.

### DETAILED DESCRIPTION OF THE INVENTION

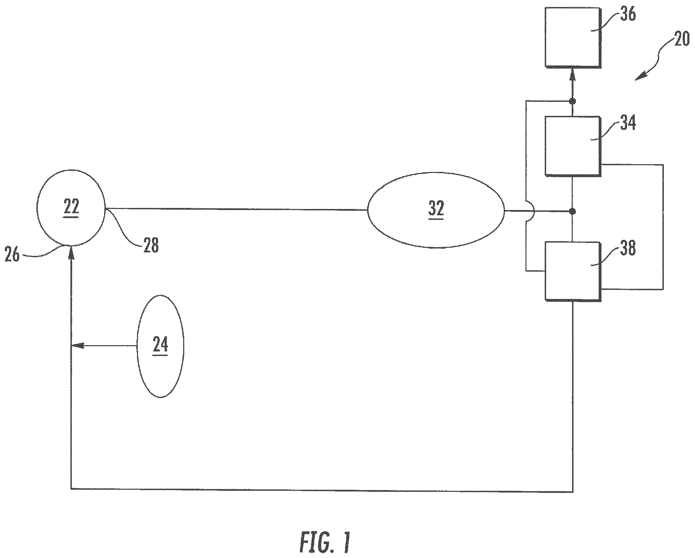

FIG. 1 is a schematic diagram of an aircraft fuel supply system 20 configured to supply fuel to an engine, such as the engine illustrated in FIG. 1 for example. The supply system 20 includes a fuel pump 22 that draws fuel from a fuel supply 24. The pump 22has a pump inlet 26 in fluid communication with the fuel supply 24 and a pump outlet 28 in fluid communication with a metering valve34 and a pressure regulating valve 38. Fuel passes through a filter 342 to remove contaminants therefrom. Fuel exiting the filter 32 is then directed to the metering valve 34 to supply fuel to an engine 36. The pressure regulating valve 38 receives pressure inputs from sense lines around the metering valve 34 to regulate the pressure across the metering valve 34. If the supply of fuel at the metering valve exceeds an amount necessary for the current operating condition of the engine, the pressure regulating valve returns the excess fuel to the pump inlet 26.

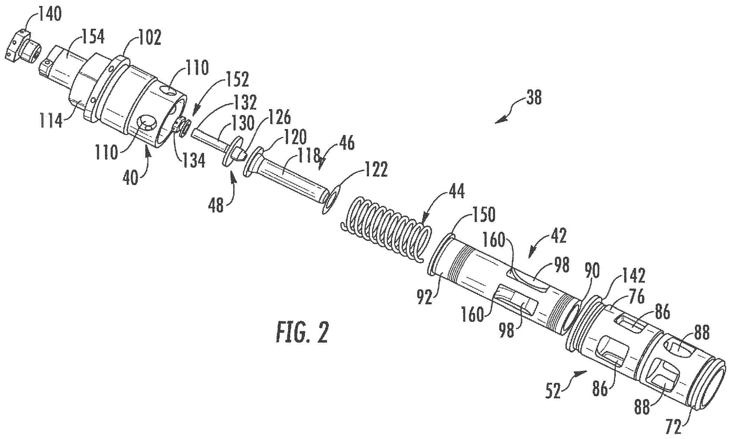

An example of a pressure regulating valve 38, such as used in the fuel supply system 20 is illustrated in more detail in FIGS. 2-4. The pressure regulating valve 38 include a closure 40, piston 42, spring 44, spacer 46, adjusting screw 48 and a sleeve 52. The pressure regulating valve 38 additionally includes a valve housing having a pressure inlet 54 arranged in fluid communication with the metering valve 34 and a pressure outlet 56 that returns excess fuel to the pump 22. The valve housing 50 defines a valve center axis A and has an internal cavity that provides at least three main chambers. A first chamber 58 receives fuel from the pressure inlet 54, a second chamber 60 is provided at the pressure outlet 56, and a third chamber 62 receives the closure 40 and adjusting screw 48. In the example shown, the first chamber 58 is positioned axially between the second 60 and third 62 chambers.

The valve housing 50 extends from an open first end 64 to an enclosed second end 66. The sleeve 52 is inserted through the open first end 64 and is held fixed within the valve housing 50 by inwardly, or radially, extending seat portions 68. The seat portions 68 cooperate with the sleeve 52 to define the chambers. The sleeve 52 is positioned substantially within the first 58 and second 60 chambers. The enclosed second end 66 of the valve housing 50 includes a recess 70 that receives a first end 72 of the sleeve 52 in a press-fit. A seal 74 is provided between an outer surface of the sleeve 52 and an inner surface of the recess 70.

An outer surface of the second end 76 of the sleeve 52 is sealed against one seat portion 68 with a seal 78. An outer surface of a center portion 80 of the sleeve 52 is sealed against another seat portion 68 with a seal 82. The sleeve 52 comprises a cylindrical body that is open at each sleeve end 72, 76 to define a central sleeve bore 84.

The sleeve 52 includes a first set of windows 86 that are positioned within the first chamber 58 and a second set of windows 88 that are positioned within the second chamber 60. The first set of windows 86 is in fluid communication with the pressure inlet 54 and the second set of windows 88 is in fluid communication with the pressure outlet 56.

The spool or piston 42 slides within the sleeve bore 84. The piston 42 extends from a first end 90 to a second end 92. An outer surface of the first end 90 abuts against an inner surface of sleeve 52 and also slides along the inner surface of the sleeve 52 at the first sleeve end 72. An outer surface of the second end 92 slides along an inner surface of the sleeve 52 and also abuts the sleeve 52 at the second sleeve end 76. The piston 42 includes a piston chamber 94 at the first end 90 that is at a fluid pressure P1 corresponding to the fluid pressure at the pressure inlet 54. The piston 42 includes a spring chamber 96 at the second end 92 that receives one end of the spring 44.

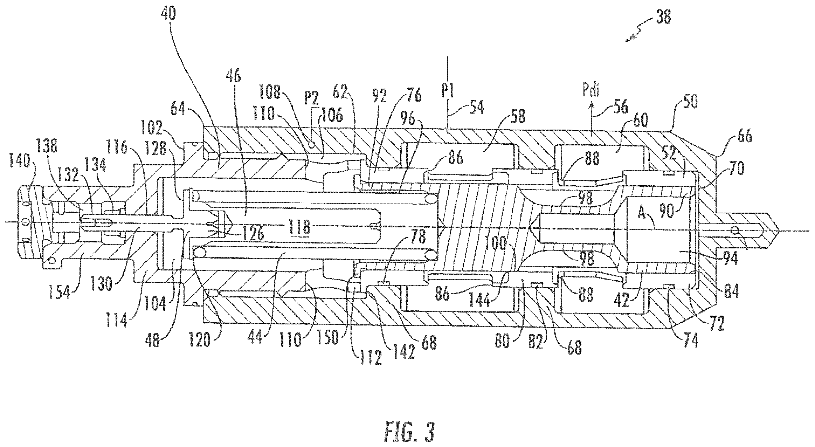

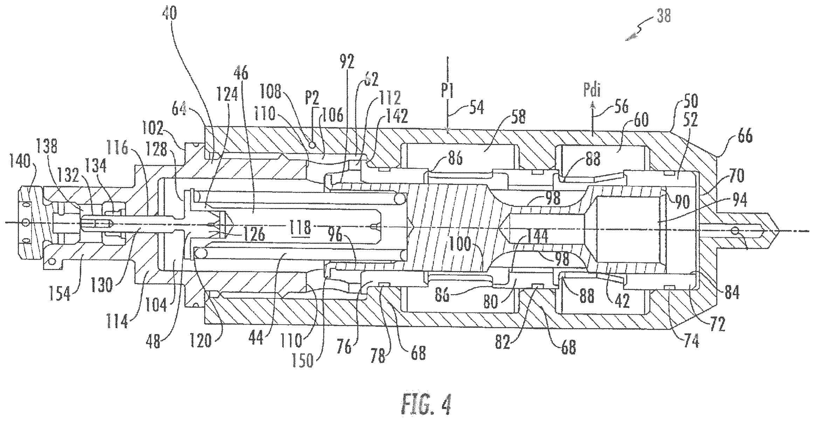

The piston 42 includes a plurality of recessed areas 98, referred to as "buckets," which are formed about an outer circumference of the piston 42. Enclosed bottom surfaces of the recessed areas 98 are radially inward of a piston outer surface 100 that contacts the sleeve 52. The recessed areas 98 at least partially overlap the center portion 80 of the sleeve 52 when the piston 42 is fit within the sleeve 52. When the pressure regulating valve 38 is in the closed position (FIG. 3), the center portion 80 of the sleeve 52 and an outer surface 100 of the piston 42 cooperate to prevent fluid flow from the pressure inlet 54 to the pressure outlet 56. In this position, the recessed areas 98 are not fluidly connected to the first set of windows 86 in the sleeve 52. When the pressure regulating valve 38 is in the open position (FIG. 4), the piston 42 has moved along the axis A such that the recessed areas 98 fluidly connect the first set of windows 86 to the second set of windows 88, and thus fluidly connects the pressure inlet 54 to the pressure outlet 56.

The closure 40 is positioned within the third chamber 62 of the valve housing 50 and includes a flange portion 102 that is seated against an end face of the valve housing 50 to close off the open end of the valve housing 50. The closure 40 defines an internal cavity 104 that receives the spacer 46, adjusting screw 48, and spring 44.

An annulus 106 is formed between an outer surface of the closure 40 and an inner surface of the valve housing 50. A separate pressure inlet 108 supplies pressure to the annulus 106 at a second pressure P2. The closure 40 includes a plurality of ports 110 that are formed about an outer circumference of a first end 112 of the closure 40. The ports 110 fluidly connect the annulus 106 with the internal cavity 104 of the closure 40.

The spacer 46 includes an elongated body portion 118 with a spring seat flange 120 at one end. The elongated body portion 118 is received within the spring 44 such that one end of the spring 44 abuts against the spring seat flange 120. An optional washer 122 (FIG. 2) can be positioned between the spring end and the spring seat flange 120. An opening 124 is formed within an end face of the spacer 46 at the spring seat flange 120.

The adjusting screw 48 includes an end 126 that is inserted into the opening 124 of the spacer 46. The adjusting screw 48 includes a flange 128 that is seated against the spring seat flange 120 when the end 126 is received within the opening 124. The adjusting screw 48 has an elongated body 130 that extends from the flange 128 to a threaded end 132 that receives a nut 134. A washer 152 is utilized with the nut 134 to prevent axial movement during operation.

The closure 40 includes end face portion 114 with a center bore 116. The elongated body 130 of the adjusting screw 48 extends through the bore 116 into an outer cavity 138 formed within a closure extension portion 154 that extends outwardly from the end face portion 114. The nut 134 is tightened against the end face portion 114 within the outer cavity 138 to adjust the spring force of the spring 44. A plug 140 is inserted into the closure extension portion 154 to seal the outer cavity 138.

The spring force and the fluid pressure from the separate pressure inlet 108 cooperate to bias the piston 42 to the closed position. When the pressure at the pressure inlet 200 overcomes the combination of the spring force and pressure from pressure inlet 108, the piston moves the valve 38 to the open position to fluidly connect the pressure inlet 54 to the outlet 56. It should be understood that the pressure regulating valve illustrated and described herein is intended as an example only, and pressure regulating valves having other configurations are within the scope of the disclosure.

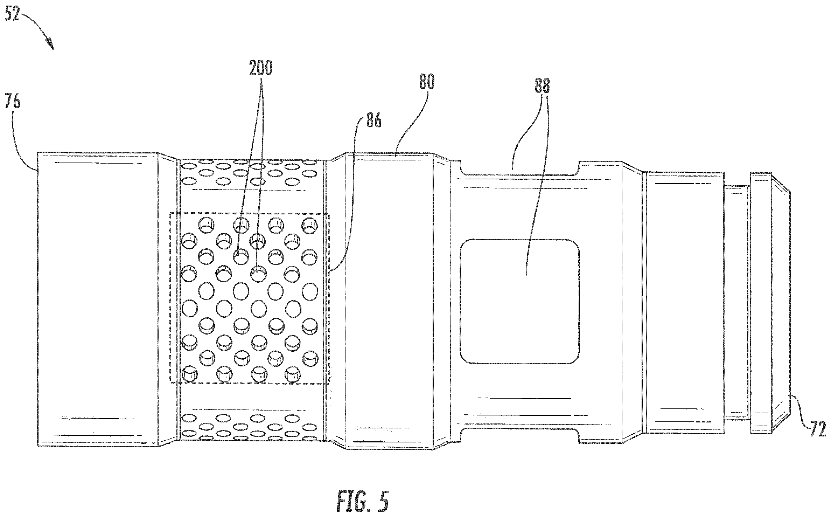

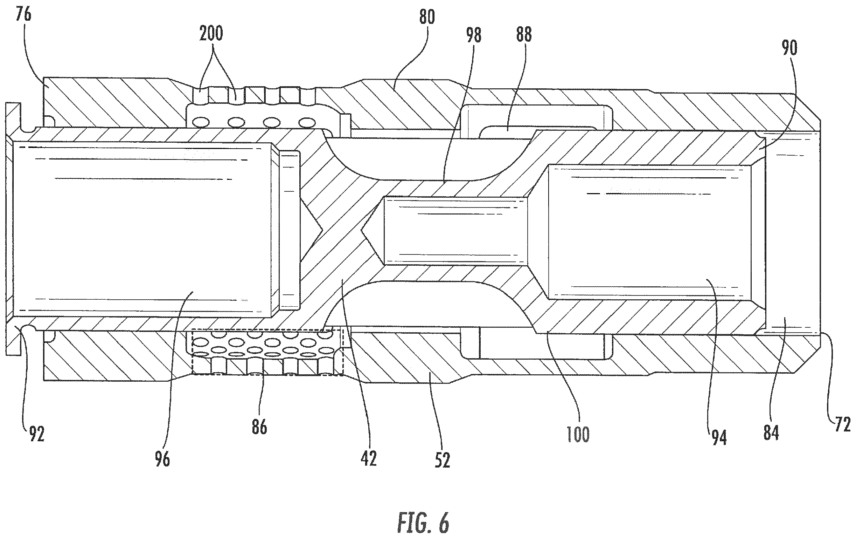

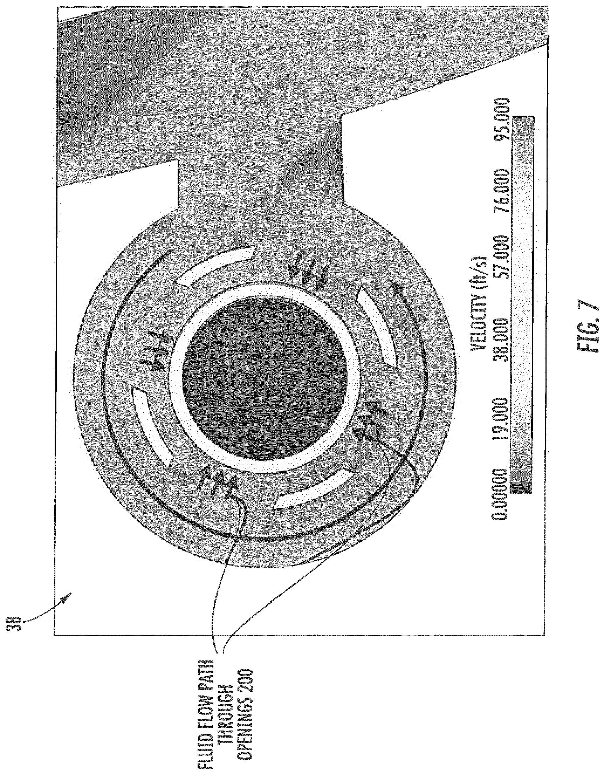

Referring now to FIGS. 5-7, the sleeve 52 of the pressure regulating valve 38 is illustrated in more detail. In a conventional pressure regulating valve, each window of the first set of windows 86 includes a single large opening, and each window of the second set of windows 88 also includes a single large opening formed in the sleeve 52 (as shown in FIGS. 2-4). The large openings that define the first set of windows 86 allow rotation of the fluid flow as it passes there through, which contributes to the rotational forces acting on the pressure regulating valve 38. To reduce the rotation of the fluid flow, each window of the first set of windows 86 comprises a plurality of small through holes 200, as shown in FIG. 5. The total area of the plurality of small holes 200 that define each window 86 may be substantially equal to the area of a conventional window having a single large opening. In addition, the pressure drop of the fluid as it flows through the plurality of small holes 200 that define each of the first windows 86 is substantially identical to the pressure drop if each of the windows 86 were defined by a single large opening.

The plurality of small through holes 200 that define a window 86 may be substantially uniform, or alternatively, may vary in size and/or shape. Although the small holes 200 are illustrated as being circular in shape, holes having another shape, such as oval or square for example, are contemplated herein. In the illustrated, non-limiting embodiment, the plurality of small holes 200 that define each window 86 are arranged in rows and/or columns with adjacent rows or columns being staggered or offset from one another. In addition, the pluralities of small holes 200 that define each of the first set of windows spaced about the periphery of the sleeve 52 may be substantially uniform or may have different configurations. In the illustrated, non-limiting embodiment, the small holes 200 that define each first window 86 are separated from one another by a distance. However, embodiments where the small holes 200 extend continuously about the entire periphery of the sleeve 52 to evenly redistribute the flow are also considered within the scope of the disclosure.

The small holes 200 restrict the amount and direction of fluid flow there through. In an embodiment, the small holes 200 have a length to diameter ratio between about 1 and 2. By replacing the large opening with a plurality of small holes 200, each of the first set of windows 86 is intended to straighten or radially align the fluid flow as it passes to the pressure inlet 54. As a result, the rotational forces acting on the pressure regulating valve 38 are reduced, and the need for an anti-rotation component is eliminated. Consequently, a pressure regulator valve 38 having first windows 86 defined by a plurality of small openings 200 may be used interchangeably between systems with different fluid housings.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A sleeve (52) for a pressure regulating valve comprising:
a sleeve body surrounding a central axis and defined by an overall length extending from a first end (72) to a second end (76), the sleeve body having a central sleeve bore (84) extending from the first end (72) to the second end (76), the sleeve body containing a first set of windows (86) circumferentially spaced about the central axis and a second set of windows (88) axially spaced from the first set of windows (86) and circumferentially spaced about the central axis, **characterised in that** each window of the first set of windows (86) is defined by a plurality of small holes (200).

2. The sleeve according to claim 1, wherein each of the plurality of small holes (200) has a length in a flow direction and a diameter, and a ratio of the length in the flow direction to the diameter (L/D) is between about 1 and about 2.

3. The sleeve according to claim 1, wherein the plurality of small holes (200) that define a window of the first set of windows (86) are arranged in at least one of rows and columns.

4. The sleeve according to claim 3, wherein adjacent rows or columns are arranged in a staggered configuration.

5. The sleeve according to claim 1, wherein the plurality of small holes (200) that define a window are substantially identical.

6. The sleeve according to claim 1, wherein each plurality of small holes (200) that define a window of the first set of windows (86) is substantially identical.

7. The sleeve according to claim 1, wherein the plurality of small holes (200) extend continuously about the central axis of the sleeve.

8. The sleeve (52) according to claim 1, wherein each window of the first set of windows (86) radially aligns a fluid flow there through.

9. The sleeve according to claim 8, wherein each window of the first set of windows (86) is defined by a plurality of small holes (200).

10. The sleeve according to claim 9, wherein each of the plurality of small holes (200) has a length in a flow direction and a diameter, and a ratio of the length in the flow direction to the diameter (L/D) is between about 1 and about 2.

11. The sleeve according to claim 9, wherein the plurality of small holes (200) that define a window of the first set of windows are arranged in at least one of rows and columns.

12. The sleeve according to claim 11, wherein adjacent rows or columns are arranged in a staggered configuration.

13. The sleeve according to claim 9, wherein the plurality of small holes (200) that define a window are substantially identical.

14. The sleeve according to claim 9, wherein each plurality of small holes (200) that define a window of the first set of windows is substantially identical.

15. The sleeve according to claim 9, wherein the plurality of small holes (200) extend continuously about the central axis of the sleeve.

## Patentansprüche

1. Hülse (52) für ein Druckregelventil, umfassend:
einen Hülsenkörper um eine Mittelachse und definiert durch eine Gesamtlänge von einem ersten Ende (72) zu einem zweiten Ende (76), wobei der Hülsenkörper eine zentrale Hülsenbohrung (84) aufweist, die sich vom ersten Ende (72) bis zum zweiten Ende (76) erstreckt, wobei der Hülsenkörper
einen ersten Satz von Fenstern (86) enthält, der in Umfangsrichtung um die Mittelachse beabstandet ist, und einen zweiten Satz von Fenstern (88), der axial vom ersten Satz von Fenstern (86) beabstandet und in Umfangsrichtung um die Mittelachse beabstandet ist, **dadurch gekennzeichnet,**
**dass** jedes Fenster des ersten Satzes von Fenstern (86) durch eine Vielzahl von kleinen Löchern (200) definiert ist.

2. Hülse nach Anspruch 1, wobei jedes der Vielzahl von kleinen Löchern (200) eine Länge in einer Durchflussrichtung und einen Durchmesser aufweist, und ein Verhältnis der Länge in Durchflussrichtung zum Durchmesser (L/D) zwischen 1 und ungefähr 2 liegt.

3. Hülse nach Anspruch 1, wobei die Vielzahl von kleinen Löchern (200), die ein Fenster des ersten Satzes von Fenstern (86) definiert, in mindestens einer von Reihen und Spalten angeordnet ist.

4. Hülse nach Anspruch 3, wobei nebeneinanderliegende Reihen oder Spalten in einer versetzten Konfiguration angeordnet sind.

5. Hülse nach Anspruch 1, wobei die Vielzahl von kleinen Löchern (200), die ein Fenster definiert, im Wesentlichen identisch ist.

6. Hülse nach Anspruch 1, wobei jede Vielzahl von kleinen Löchern (200), die ein Fenster des ersten Satzes von Fenstern (86) definiert, im Wesentlichen identisch ist.

7. Hülse nach Anspruch 1, wobei die Vielzahl von kleinen Löchern (200) sich fortlaufend um die Mittelachse der Hülse erstreckt.

8. Hülse (52) nach Anspruch 1, wobei jedes Fenster des ersten Satzes von Fenstern (86) einen Fluiddurchfluss durch es hindurch radial ausrichtet.

9. Hülse nach Anspruch 8, wobei jedes Fenster des ersten Satzes von Fenstern (86) durch eine Vielzahl von keinen Löchern (200) definiert ist.

10. Hülse nach Anspruch 9, wobei jedes der Vielzahl von kleinen Löchern (200) eine Länge in einer Durchflussrichtung und einen Durchmesser aufweist, und ein Verhältnis der Länge in Durchflussrichtung zum Durchmesser (L/D) zwischen ungefähr 1 und ungefähr 2 liegt.

11. Hülse nach Anspruch 9, wobei die Vielzahl von kleinen Löchern (200), die ein Fenster des ersten Satzes von Fenstern definiert, in mindestens einer von Reihen und Spalten angeordnet ist.

12. Hülse nach Anspruch 11, wobei nebeneinanderliegende Reihen oder Spalten in einer versetzten Konfiguration angeordnet sind.

13. Hülse nach Anspruch 9, wobei die Vielzahl von kleinen Löchern (200), die ein Fenster definiert, im Wesentlichen identisch ist.

14. Hülse nach Anspruch 9, wobei jede Vielzahl von kleinen Löchern (200), die ein Fenster des ersten Satzes von Fenstern definiert, im Wesentlichen identisch ist.

15. Hülse nach Anspruch 9, wobei die Vielzahl von kleinen Löchern (200) sich fortlaufend um die Mittelachse der Hülse erstreckt.

## Revendications

1. Manchon (52) pour une soupape de régulation de pression comprenant :
un corps de manchon entourant un axe central et défini par une longueur totale s'étendant d'une première extrémité (72) à une seconde extrémité (76), le corps de manchon ayant un alésage de manchon central (84) s'étendant de la première extrémité (72) à la seconde extrémité (76), le corps de manchon contenant un premier ensemble de fenêtres (86) espacé de manière circonférentielle autour de l'axe central et un second ensemble de fenêtres (88) espacé de manière axiale à partir du premier ensemble de fenêtres (86) et espacé de manière circonférentielle autour de l'axe central, **caractérisé en ce que** chaque fenêtre du premier ensemble de fenêtres (86) est définie par une pluralité de petits trous (200).

2. Manchon selon la revendication 1, dans lequel chacun de la pluralité de petits trous (200) a une longueur dans une direction d'écoulement et un diamètre, et un rapport entre la longueur dans la direction d'écoulement et le diamètre (L/D) se situe entre environ 1 et environ 2.

3. Manchon selon la revendication 1, dans lequel la pluralité de petits trous (200) qui définit une fenêtre du premier ensemble de fenêtres (86) est agencée dans au moins l'une des rangées et des colonnes.

4. Manchon selon la revendication 3, dans lequel des rangées ou des colonnes adjacentes sont agencées dans une configuration en quinconce.

5. Manchon selon la revendication 1, dans lequel la pluralité de petits trous (200) qui définit une fenêtre est sensiblement identique.

6. Manchon selon la revendication 1, dans lequel chaque pluralité de petits trous (200) qui définit une fenêtre du premier ensemble de fenêtres (86) est sensiblement identique.

7. Manchon selon la revendication 1, dans lequel la pluralité de petits trous (200) s'étend de manière continue autour de l'axe central du manchon.

8. Manchon (52) selon la revendication 1, dans lequel chaque fenêtre du premier ensemble de fenêtres (86) aligne de manière radiale un écoulement de fluide à travers celle-ci.

9. Manchon selon la revendication 8, dans lequel chaque fenêtre du premier ensemble de fenêtres (86) est définie par une pluralité de petits trous (200).

10. Manchon selon la revendication 9, dans lequel chacun de la pluralité de petits trous (200) a une longueur dans une direction d'écoulement et un diamètre, et un rapport entre la longueur dans la direction d'écoulement et le diamètre (L/D) se situe entre environ 1 et environ 2.

11. Manchon selon la revendication 9, dans lequel la pluralité de petits trous (200) qui définit une fenêtre du premier ensemble de fenêtres est agencée dans au moins l'une des rangées et des colonnes.

12. Manchon selon la revendication 11, dans lequel des rangées ou des colonnes adjacentes sont agencées dans une configuration en quinconce.

13. Manchon selon la revendication 9, dans lequel la pluralité de petits trous (200) qui définit une fenêtre est sensiblement identique.

14. Manchon selon la revendication 9, dans lequel chaque pluralité de petits trous (200) qui définit une fenêtre du premier ensemble de fenêtres est sensiblement identique.

15. Manchon selon la revendication 9, dans lequel la pluralité de petits trous (200) s'étend de manière continue autour de l'axe central du manchon.
